# EUROPÄISCHE PATENTSCHRIFT

(11) **EP 3 622 118 B1**
(45) Veröffentlichungstag und Bekanntmachung des Hinweises auf die Patenterteilung: **24.02.2021**
(21) Anmeldenummer: 18726031.0
(22) Anmeldetag: 26.04.2018
(51) Int. Cl.: E02B 15/04, E02B 1/00

(54) **WASSERREINIGUNGSVORRICHTUNG FÜR FLIESSGEWÄSSER**
WATER CLEANING DEVICE FOR A FLOWING BODY OF WATER
DISPOSITIF D'ÉPURATION D'EAU POUR COURS D'EAU

(30) Priorität: 08.05.2017 DE 202017002390 U; 05.12.2017 DE 202017006236 U
(43) Veröffentlichungstag der Anmeldung: 18.03.2020
(73) Patentinhaber: Gesellschaft Für Planung, Maschinen- Und Mühlenbau Erhard Muhr mbH, 83098 Brannenburg (DE)
(72) Erfinder: MUHR, Erhard, 83098 Brannenburg (DE)
(86) Internationale Anmeldenummer: PCT/DE2018/000117
(87) Internationale Veröffentlichungsnummer: WO 2018/206026

(56) Entgegenhaltungen:
- FR-A1- 2 735 509
- US-A- 4 318 633

## Beschreibung

Die vorliegende Erfindung betrifft eine Wasserreinigungsvorrichtung für Fließgewässer, mit den in dem Patentanspruch 1 angegebenen Merkmalen.

Aus dem Stand der Technik ist es bekannt zur Reinigung von Fließgewässern in einem Fließgewässer Rechenstäbe oder Rechentrommel-Reihen vorzusehen, welche sich durchgehend über die gesamte Breite des Fließgewässers erstrecken.

Diese aus dem Stand der Technik bekannte Wasserreinigungsvorrichtung für ein Fließgewässer in sich über die gesamte Breite des Fließgewässers durchgehend erstreckender Form, ist in vielerlei Hinsicht nachteilig:
Ein erster Nachteil dieser aus dem Stand der Technik bekannten Wasserreinigungsvorrichtung für ein Fließgewässer besteht darin, dass sie bei ihrer Beschädigung oder Verstopfung den Durchfluss des Fließgewässers blockiert und dabei Überschwemmungen der beiderseitigen Uferbereiche bewirkt.

Ein weiterer Nachteil dieser aus dem Stand der Technik bekannten Wasserreinigungsvorrichtung für ein Fließgewässer ist darin zu sehen, dass aufgrund ihrer sich über die gesamte Breite des Fließgewässers lückenlos und durchgehend erstreckenden Form dort eine Passage von Fischen nicht möglich ist. Dies ist unter Naturschutzaspekten ausgesprochen nachteilig.

Die aus dem Stand der Technik bekannte, sich über die gesamte Breite des Fließgewässers in geschlossener Form erstreckende Wasserreinigungsvorrichtung für ein Fließgewässer ist schließlich auch deswegen nachteilig, weil sie ein unüberwindbares Hindernis für die Schifffahrt darstellt, welches jede Schiffspassage unmöglich macht.

Um dennoch die Passage eines Schiffes an der bekannten Wasserreinigungsvorrichtung vorbei zu ermöglichen, ist dort die teure Installation von neben der bekannten Wasserreinigungsvorrichtung vorgesehenen Schleusen erforderlich. Diese Schleusen sind sowohl bei Ihrer Montage als auch während ihres Unterhaltes kostenintensiv und weisen eine ausgeprägte Fehlbedienungsmöglichkeit auf.

US4318633 A offenbart eine Wasserreinigungsvorrichtung für Fließgewässer, welche die Merkmale des Oberbegriffes des Anspruchs 1 aufweist.

Aufgabe der vorliegenden Erfindung ist daher die Bereitstellung einer Wasserreinigungsvorrichtung für ein Fließgewässer, welche selbst bei ihrer Beschädigung oder Verstopfung den Durchfluss des Fließgewässers nicht blockiert und dadurch die Entstehung von Überschwemmungen der beiderseitigen Uferbereiche entgegenwirkt, welche die ungehinderte Passage von Fischen erlaubt und daher unter Naturschutzaspekten ausgesprochen vorteilhaft ist, welche auch die ungehinderte, kostengünstige Passage von Schiffen erlaubt und den Einsatz von wartungsintensiven und teuren Schleusen nicht erfordert.

Erfindungsgemäß wird diese Aufgabe bei einer gattungsgemäßen Vorrichtung durch die in dem Patentanspruch 1 angegebenen Merkmale gelöst. Besonders bevorzugte Ausführungsformen sind Gegenstand der Unteransprüche.

Ausführungsbeispiele der Erfindung werden anhand der Zeichnungen näher beschrieben. Es zeigen:

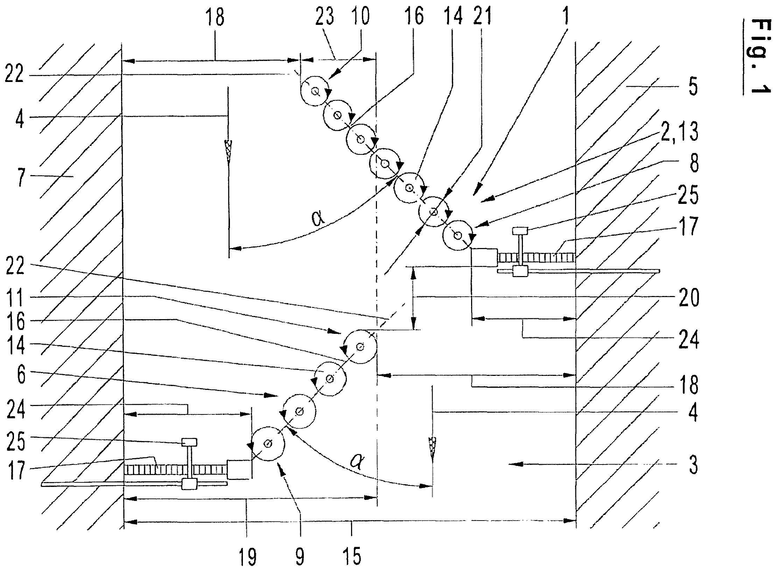

Figur 1 eine schematische Draufsicht auf eine erfindungsgemäße Wasserreinigungsvorrichtung (1), welche zwei einander gegenüberliegende Rechentrommel-Reihen (13) umfasst, wobei jede der beiden gegenüberliegenden Rechentrommel-Reihen (13) über einen Stabrechen (17) mit Rechenreinigungsvorrichtung (25) mittelbar mit dem jeweiligen Ufer (5, 7) in Verbindung steht, wobei die Rechentrommel-Reihen (13) gegenüber dem Ufer (5, 7) schräg ausgerichtet sind und mit der Fließrichtung (4) einen Winkel α einschließen, während die Längsachsen der Stabrechen (17) und die den jeweiligen Stabrechen (17) tragenden Uferfronten (5, 7) jeweils einen rechten Winkel einschließen und wobei sich die freien Enden (10, 11) der in einem Abstand (20) in Fließrichtung (4) hintereinander beabstandeten Wasserreinigungseinheiten (2, 6) - in einer Draufsicht - in einem Überlappungsbereich (23) überlappend hintergreifen;

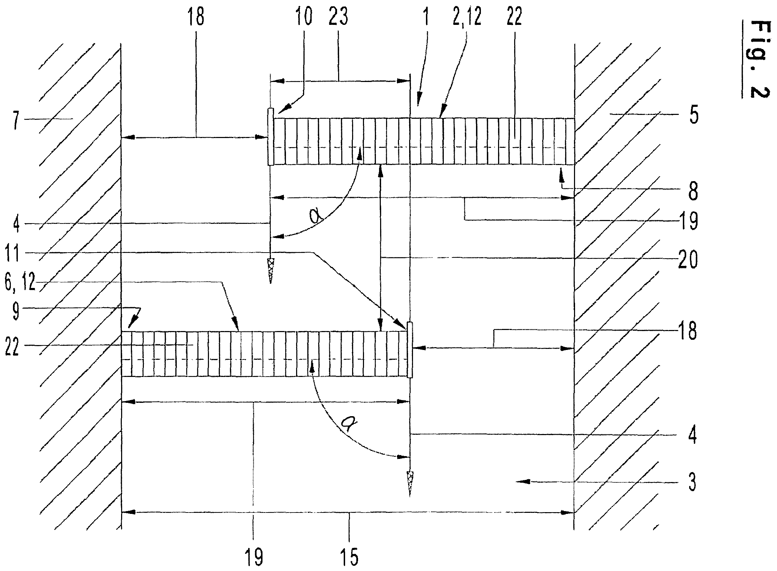

Figur 2 eine schematische Draufsicht auf eine erfindungsgemäße Wasserreinigungsvorrichtung (1), welche zwei einander gegenüberliegende, in Form von Stabrechen (12) ausgebildete Wasserreinigungseinheiten (2, 6) umfasst, wobei die Stabrechen (12) mit der Fließrichtung (4) einen im wesentlichen rechtwinkligen Winkel α einschließen und die Längsachsen der Stabrechen (12) und die die Stabrechen (12) tragende Uferfront (5, 7) einen im wesentlichen rechten Winkel einschließen, wobei die Stabrechen (12) unmittelbar mit dem jeweiligen Ufer (5, 7) in Verbindung stehen;

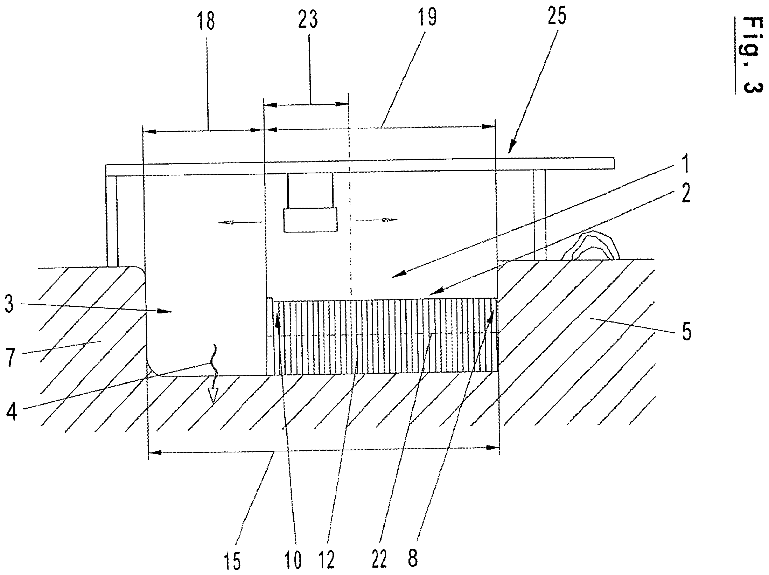

Figur 3 einen schematischen Querschnitt durch eine in Form eines Stabrechens (12) ausgebildete Wasserreinigungseinheit (2), wobei sich eine Rechenreinigungsvorrichtung (25) portalartig über die Breite (15) des Fließgewässers (3) erstreckt und das Absetzen von aus dem Stabrechen (12) entferntem Schwemmgut zumindest auf dem den Stabrechen (12) tragenden Ufer (5) ermöglicht.

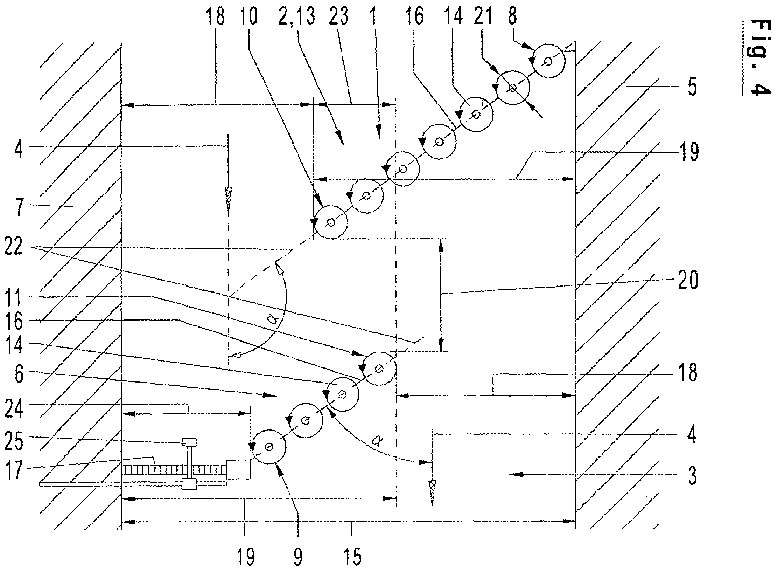

Figur 4 eine schematische Draufsicht auf eine erfindungsgemäße Wasserreinigungsvorrichtung (1), welche zwei einander gegenüberliegende Rechentrommel-Reihen (13) umfasst, wobei nur die stromabseitige Wasserreinigungseinheit (6) über einen Stabrechen (17) mit Rechenreinigungsvorrichtung (25) mittelbar mit dem jeweiligen Ufer (7) in Verbindung steht, wobei die Längsachse (22) der stromaufseitigen Wasserreinigungseinheit (2) mit der Fließrichtung (4) des zu reinigenden Fließgewässers (3) einen Winkel α in dem Bereich von 170,0° bis 89,9° einschließt und wobei die Längsachse (22) der stromabseitigen Wasserreinigungseinheit (6) mit der Fließrichtung (4) des zu reinigenden Fließgewässers (3) einen Winkel α in dem Bereich von 20,0° bis 90,0° einschließt, während die Längsachse des Stabrechens (17) und die dem Stabrechen (17) tragende Uferfront (7) einen rechten Winkel einschließen und wobei sich die freien Enden (10, 11) der in einem Abstand (20) in Fließrichtung (4) hintereinander beabstandeten Wasserreinigungseinheiten (2, 6) - in einer Draufsicht - in einem Überlappungsbereich (23) überlappend hintergreifen.

Wie den Figuren 1, 2, 3 und 4 zu entnehmen ist, betrifft die vorliegende Erfindung eine Wasserreinigungsvorrichtung (1) für ein Fließgewässer (3).

Gemäß der Erfindung umfasst diese Wasserreinigungsvorrichtung (1) zwei, drei, vier, fünf, sechs oder mehrere Wasserreinigungseinheiten (2, 6) welche in Fließrichtung (4) hintereinander und voneinander in einem Abstand (20) beabstandet angeordnet sind.

Wie in den Figuren 1 bis 4 dargestellt, steht ein Ende (8) der einen Wasserreinigungseinheit (2) - in einer Draufsicht - mit dem einen Ufer (5) mittelbar oder unmittelbar in Verbindung während ein Ende (9) einer anderen, gegenüberliegenden Wasserreinigungseinheit (6) - in einer Draufsicht - mit dem anderen, gegenüberliegenden Ufer (7) mittelbar oder unmittelbar in Verbindung steht. Aus den Figuren 1, 2, 3 und 4 geht hervor, dass sich die in Richtung des Fließgewässers (3) ragenden, freien Enden (10, 11) der Wasserreinigungseinheiten (2, 6) - in einer Draufsicht - in Bezug auf die Fließrichtung (4) einander in einem Überlappungsbereich (23) hintergreifend überlappen

Gemäß der Erfindung erfassen die - zwei oder mehrere voneinander in Fließrichtung (4) beabstandete (20) Wasserreinigungseinheiten (2, 6) umfassende - Wasserreinigungsvorrichtung (1) - bei einer Draufsicht - in ihrer Gesamtheit die volle Breite (15) des Fließgewässers (3)

Der in den Figuren 1, 2, 3 und 4 dargestellte Überlappungsbereich (23) zwischen den freien Enden (10, 11) von zusammenwirkenden, in Fließrichtung (4) in einem Abstand (20) zueinander versetzten und von gegenüberliegenden Ufern (5, 7) ausgehenden Wasserreinigungseinheiten (2, 6) kann beispielsweise eine Breite aufweisen, welche in dem Bereich von 0,1 m bis 1000,0 m, vorzugsweise in dem Bereich von 0,2 m bis 900,0 m, insbesondere in dem Bereich von 0,3 m bis 800,0 m, liegt.

Im Allgemeinen können die sich die in Richtung der Breite (15) des Fließgewässers (3) ausdehnenden Breiten (19) der Wasserreinigungseinheiten (2, 6) gleich oder voneinander verschieden sein. Beispielsweise kann die Breite (19) jeder Wasserreinigungseinheit (2, 6) - einschließlich eines gegebenenfalls vorhandenen Stabrechens (17) - in dem Bereich von 2,0 m bis 500,0 m, vorzugsweise in dem Bereich von 2,5 m bis 400,0 m, insbesondere in dem Bereich von 3,0 m bis 300,0 m, liegen.

Der in Figuren 1, 2 und 4 dargestellte Abstand (20) zwischen zwei Wasserreinigungseinheiten (2, 6) kann - in einer Draufsicht - in Fließrichtung (4) beispielsweise in dem Bereich von 1,0 m bis 500,0 m, vorzugsweise in dem Bereich von 1,5 m bis 400,0 m, insbesondere in dem Bereich von 2,0 m bis 300,0 m, liegen.

In einer ersten Ausführungsalternative gemäß den Figuren 1 und 2 können eine durch die jeweilige Wasserreinigungseinheit (2 und/oder 6) gedachte Längs-Achse (22) einerseits und die Fließrichtung (4) des Fließgewässers (3) andererseits, einen Winkel α einschließen, der beispielsweise in dem Bereich von 20° bis 90,0°, vorzugsweise in dem Bereich von 30° bis 90,0°, insbesondere in dem Bereich von 40° bis 90,0°, liegt. Dabei können die Winkel α von zwei einander gegenüberliegenden Wasserreinigungseinheiten (2, 6) gleich oder voneinander verschieden sein.

In einer zweiten Ausführungsalternative - gemäß Figur 4 - können eine durch die stromaufseitige Wasserreinigungseinheit (2) gedachte Längs-Achse (22) einerseits und die Fließrichtung (4) des Fließgewässers (3) andererseits, einen Winkel α einschließen, der beispielsweise in dem Bereich von 170,0° bis 89,9°, vorzugsweise in dem Bereich von 160,0° bis 80,0°, insbesondere in dem Bereich von 150° bis 70,0°, liegt. Dabei können die Winkel α von zwei einander gegenüberliegenden Wasserreinigungseinheiten (2, 6) gleich oder voneinander verschieden sein.

Wie in Figur 4 dargestellt, kann in dieser zweiten Ausführungsalternative eine durch die stromabseitige Wasserreinigungseinheit (6) gedachte Längs-Achse (22) einerseits und die Fließrichtung (4) des Fließgewässers (3) andererseits, einen Winkel α einschließen, der beispielsweise in dem Bereich von 20° bis 90,0°, vorzugsweise in dem Bereich von 30° bis 90,0°, insbesondere in dem Bereich von 40° bis 90,0°, liegt.

Bei der erfindungsgemäßen Wasserreinigungsvorrichtung (1) können also die zwischen den Längsachsen (22) der gegenüber liegenden Wasserreinigungseinheiten (2, 6) einerseits und der Fließrichtung (4) des Fließgewässers (3) andererseits, eingeschlossenen Winkel α - in Abhängigkeit von einer stromaufseitigen oder stromabseitigen Positionierung - gleich oder voneinander verschieden sein.

Durch diese Schrägstellung der Rechentrommel-Reihen (13) in dem Winkel α wird ein selbstreinigender Abtransport von durch die Rechentrommel-Reihen (13) oder die Stabrechen (12) aufgefangenem Schwemmgut durch die Strömung des Fließgewässers (3) in Richtung der uferseitigen Enden (8, 9) der jeweiligen Wasserreinigungseinheiten (2, 6) veranlasst oder zumindest unterstützt.

Gemäß der zweiten, in Figur 4 dargestellten Ausführungsalternative, kann - in einer Draufsicht - die Längsachse (22) der stromaufseitigen Wasserreinigungseinheit (2) in Richtung der zentralen Mitte des Fließgewässers (3) geneigt sein. Vorzugsweise wird dann die in Fließrichtung (4) weisende Oberseite der Rechentrommeln (14) der stromaufseitigen Wasserreinigungseinheit (2) in Richtung der Mitte des Fließgewässers (3) rotativ angetrieben.

An der stromaufseitigen Wasserreinigungseinheit (2) aufgefangenes Schwemmgut wird dann - mit Unterstützung des Fließgewässers (3) - in Richtung des freien Endes (10) der stromaufseitigen Wasserreinigungseinheit (2) transportiert und dort in das Fließgewässer (3) wieder abgegeben.

Das an dem freien Ende (10) der stromaufseitigen Wasserreinigungseinheit (2) an das Fließgewässer (3) abgegebene Schwemmgut wird in dieser zweiten Ausführungsalternative von der stromabseitigen Wassereinigungseinheit (6) aufgefangen, wobei deren stromabseitiges Ende (9) beispielsweise über einen Stabrechen (17) mit dem die stromabseitige Wasserreinigungseinheit (6) tragenden Ufer (7) mittelbar in Verbindung steht.

Der besondere Vorteil der vorstehend beschriebenen zweiten Ausführungsalternative besteht darin, dass sie - im Gegensatz zu der in Figur 1 beschriebenen ersten Ausführungsalternative mit zwei, an beiden gegenüberliegenden Ufern (5, 7) vorgesehenen Schwemmgutentnahmevorrichtungen (17) - lediglich eine einzige Schwemmgutentnahmevorrichtung (17) zwischen der stromabseitigen Wasserreinigungseinheit (6) und dem diese mittelbar tragenden Ufer (7) erfordert.

Falls die Infrastruktur (Kompostieranlage, Zufahrtsstraße etc.) nicht auf beiden Uferseiten (5, 7) in ausreichendem Maße gegeben ist, genügt es für einen ordnungsgemäßen Betrieb der erfindungsgemäßen Wasserreinigungsvorrichtung (1) nunmehr also erstmals, lediglich an einem der beiden Ufer (5 oder 7) die Ausbildung einer für den Betrieb einer Wasserreinigungsvorrichtung üblichen Infrastruktur zu veranlassen.

Gemäß der Erfindung weisen die Wasserreinigungseinheiten (2, 6) jeweils gleiche oder voneinander verschiedene (vergleiche Figuren 1, 2, 3 und 4) Bauarten auf.

Gemäß einer ersten Alternative der Erfindung sind die Wasserreinigungseinheiten (2, 6) jeweils in der Form eines Stabrechens (12) mit vertikalen oder horizontalen Rechenstäben - einschließlich zugehöriger Rechenreinigungssysteme (25) - ausgebildet (Figuren 2 und 3).

Alternativ hierzu können die Wasserreinigungseinheiten (2, 6) jeweils in der Form einer Rechentrommel-Reihe (13) ausgebildet sein (siehe Figuren 1 und 4).

Gemäß der zweiten Alternative der Erfindung umfasst jede Rechentrommel-Reihe (13) jeweils eine Reihe (13) von um ihre vertikalen Hochachsen drehbaren Rechentrommeln (14) wobei die Rechentrommeln (14) in einer Draufsicht gleichsinnig oder gegenläufig - in Bezug auf ihre stromaufseitige Trommelfläche - in Richtung des die jeweilige Wasserreinigungseinheit (2, 6) mittelbar oder unmittelbar tragenden Ufers (5, 7) - oder in Richtung des Stabrechens (17) der stromabseitigen Wasserreinigungseinheit (6) - antreibbar sind.

Vorzugsweise können im Falle der in Figur 4 dargestellten Ausführungsform die Drehrichtungen der Rechentrommeln (14) von zwei gegenüberliegenden Rechentrommel-Reihen (13) in einer Draufsicht gleich und gleichsinnig sein, wobei diese Drehrichtung in Richtung derjenigen stromabseitigen Wasserreinigungseinheit (2 oder 6) ausgerichtet sind, welche mit einer Rechenreinigungsvorrichtung (25) zusammenwirkt.

Gemäß der zweiten Alternative der Erfindung ist in der, in den Figuren 1 und 4 dargestellten Ausführungsform die jeweilige Wasserreinigungseinheit (2, 6) also in Form einer Rechentrommel-Reihe (13) aus mehreren um ihre Hochachsen drehbaren Rechentrommeln (14) ausgebildet

Vorzugsweise kann zwischen den vertikal ausgerichteten Rechentrommeln (14) jeweils ein in Form eines vertikalen Streifens ausgebildeter Abstreifer (16) vorgesehen sein.

Insbesondere aus Figur 1 ist ersichtlich, dass zwischen den in Richtung des zugehörigen Ufers (5, 7) weisenden Enden (8, 9) der jeweiligen Wasserreinigungseinheit (2, 6) einerseits und dem die Wasserreinigungseinheit (2, 6) mittelbar oder unmittelbar tragenden Ufer (5, 7) jeweils ein Stabrechen (17) vorgesehen sein kann.

Dieser Stabrechen (17) kann beispielsweise vertikal oder horizontal ausgerichtete Rechenstäbe und eine zugehörige, zumindest in Richtung des angrenzenden Ufers (5, 7) wirkende Rechenreinigungsvorrichtung (25) umfassen.

Aus Figur 4 geht hervor, dass die erfindungsgemäße Wasserreinigungsvorrichtung (1) lediglich einen einzelnen Stabrechen (17) - zwischen dem stromabseitigen Ende (9) der stromabseitigen Wasserreinigungseinrichtung (6) und dem die stromabseitige Wasserreinigungseinrichtung (6) mittelbar tragenden Ufer (7) - umfassen kann.

In der Regel können die Breiten (24) des gegebenenfalls vorhandenen einen oder der mehreren Stabrechen (17) gleich oder voneinander verschieden sein und beispielsweise in dem Bereich von 0,4 m bis 50,0 m, vorzugsweise in dem Bereich von 0,5 bis 40,0 m, insbesondere in dem Bereich von 0,6 m bis 30,0 m, liegen.

Gemäß der zweiten Alternative der Erfindung drehen die Rechentrommeln (14) jeder Rechentrommel-Reihe (13) mit der gleichen Rotationsgeschwindigkeit oder mit voneinander verschiedenen Rotationsgeschwindigkeiten - jeweils in die gleiche Drehrichtung (siehe Figur 4) oder in voneinander verschiedene Drehrichtungen (siehe Figur 1) - um ihre jeweilige Hochachse

Vorzugsweise kann jede Rechentrommel (14) beispielsweise in dem Bereich von 0,1 Umdrehungen pro Minute (UpM) bis 20,0 UpM, vorzugsweise in dem Bereich von 0,2 UpM bis 18,0 UpM, insbesondere in dem Bereich von 0,3 UpM bis 16 UpM, um ihre Hochachse rotativ antreibbar sein.

In der Regel können - in einer Draufsicht - die Durchmesser (21) der Rechentrommeln (14) gleich oder voneinander verschieden sein und beispielsweise in dem Bereich von 0,2 m bis 15,0 m, vorzugsweise in dem Bereich von 0,4 m bis 11,0 m, insbesondere in dem Bereich von 0,5m bis 9,0 m, liegen.

In einer besonders bevorzugten Ausführungsform der erfindungsgemäßen Wasserreinigungsvorrichtung (1) kann der Abstand zwischen einzelnen vertikalen oder horizontalen Rechenstäben oder zwischen den Rechenelementen einer Rechentrommel (14) beispielsweise in dem Bereich von 1,0 mm bis 300,0 mm, insbesondere in dem Bereich von 1,5 mm bis 250,0 mm, insbesondere in dem Bereich von 2,0 mm bis 200,0 mm, liegen.

Aus den Figuren 1, 2, 3 und 4 geht hervor, dass die Abstände (18) zwischen den freien Enden (10, 11) der Wasserreinigungseinheiten (2, 6) einerseits und dem jeweils gegenüberliegenden Ufer (5, 7) andererseits, gleich oder voneinander verschieden sein können und beispielsweise in dem Bereich von 1,0 m bis 200,0 m, vorzugsweise in dem Bereich von 1,5 m bis 150,0 m, insbesondere in dem Bereich von 2,0 m bis 100,0 m, liegen können.

Im Allgemeinen kann die Fließgeschwindigkeit des zu reinigenden Fließgewässers (3) beispielsweise in dem Bereich von 0,05 m/sec bis 15,0 m/sec, vorzugsweise in dem Bereich von 0,1 m/sec bis 11,0 m/sec, insbesondere in dem Bereich von 0,2 m/sec bis 9,0 m/sec, liegen.

Beispielsweise kann die Breite (15) des Fließgewässers (3) in dem Bereich von 1,0 m bis 1000,0 m, vorzugsweise in dem Bereich von 1,5 m bis 900,0 m, insbesondere in dem Bereich von 2,0 m bis 800,0 m, liegen.

Zusammenfassend ist festzustellen, dass im Rahmen der vorliegenden Erfindung eine Wasserreinigungsvorrichtung (1) für Fließgewässer (3) bereitgestellt wird, welche selbst bei ihrer Beschädigung oder Verstopfung den Durchfluss des Fließgewässers (3) nicht blockiert.

Aufgrund der erfindungswesentlichen Möglichkeit des seitlichen oder schrägen Durchströmens des Fließgewässers (3) durch den Überlappungsbereich (23) hindurch, kann selbst bei einer sehr unwahrscheinlichen kompletten Verstopfung der erfindungsgemäßen Wasserreinigungsvorrichtung (1) die Entstehung von Überschwemmungen des beiderseitigen Uferbereiches (5, 7) sicher vermieden werden.

Ein besonderer Vorteil der erfindungsgemäßen Wasserreinigungsvorrichtung (1) ist darin zusehen, dass sie - aufgrund des Vorsehens einer barrierefreien Durchschwimmmöglichkeit in dem Überlappungsbereich (23) - eine völlig ungehinderte Passage von Fischen erlaubt. Dies ist insbesondere unter Naturschutzaspekten ausgesprochen vorteilhaft.

Ein weiterer Vorteil der erfindungsgemäßen Wasserreinigungsvorrichtung (1) besteht darin, dass sie - trotz sehr guter Reinigungswirkung - die ungehinderte, besonders kostengünstige Passage von Schiffen durch den offenen Überlappungsbereich (23) erlaubt.

Außerdem ist die erfindungsgemäße Wasserreinigungsvorrichtung (1) auch deswegen besonders vorteilhaft, weil sie - aufgrund der Passagemöglichkeit durch den offenen Überlappungsbereich (23) - den Einsatz von wartungsintensiven und teuren Schleusen nicht mehr erfordert.

Insbesondere die zweite Ausführungsalternative - mit lediglich einem einzelnen, zwischen dem stromabseitigen Ende (9) der stromabseitigen Wasserreinigungseinheit (6) als Rechenreinigungsvorrichtung (25) vorgesehenen Stabrechen (17) zur Entnahme von Schwemmgut einerseits und dem die stromabseitige Wasserreinigungseinheit (6) mittelbar tragenden Ufer (7) andererseits, wobei die Längsachse (22) der stromaufseitigen Wasserreinigungseinheit (2) mit der Fließrichtung (4) des Fließgewässers (3) einen Winkel α in dem Bereich von 170,0 ° bis 89,9° einschließt und wobei die Längsachse (22) der stromabseitigen Wasserreinigungseinheit (6) mit der Fließrichtung (4) des Fließgewässers (3) einen Winkel α in dem Bereich von 20,0° bis 90,0° einschließt - weist den Vorteil auf, dass eine hocheffiziente Wasserreinigungsvorrichtung (1) gemäß Figur 4 nunmehr auch in dem Falle solcher Fließgewässer (3) einsetzbar ist, welche lediglich auf einer einzigen Uferseite (5 oder 7) über die zum ordnungsgemäßen Betrieb einer Wasserreinigungsvorrichtung erforderliche Infrastruktur (z.B. Kompostieranlage, Zufahrtsstraße etc.) verfügen.

## Patentansprüche

1. Wasserreinigungsvorrichtung (1) für Fließgewässer (3), welche zwei, drei, vier, fünf, sechs oder mehrere Wasserreinigungseinheiten (2, 6) umfasst, welche in Fließrichtung (4) hintereinander und voneinander in einem Abstand (20) beabstandet angeordnet sind, wobei ein Ende (8) der einen Wasserreinigungseinheit (2) - in einer Draufsicht - mit dem einen Ufer (5) mittelbar oder unmittelbar in Verbindung steht und wobei ein Ende (9) der anderen Wasserreinigungseinheit (6) - in einer Draufsicht - mit dem anderen, gegenüberliegenden Ufer (7) mittelbar oder unmittelbar in Verbindung steht und wobei sich die in Richtung des Fließgewässers (3) ragenden, freien Enden (10, 11) der Wasserreinigungseinheiten (2, 6) - in einer Draufsicht - in Bezug auf die Fließrichtung (4) einander in einem Überlappungsbereich (23) hintergreifend überlappen, wobei die Wasserreinigungsvorrichtung (1) - bei einer Draufsicht - in ihrer Gesamtheit die volle Breite (15) des Fließgewässers (3) erfasst,
**dadurch gekennzeichnet, dass**
die Wasserreinigungseinheiten (2, 6) jeweils gleiche oder voneinander verschiedene Bauarten aufweisen und jeweils in der Form eines Stabrechens (12) mit vertikalen oder horizontalen Rechenstäben - einschließlich zugehöriger Rechenreinigungssysteme (25) - oder in der Form von Rechentrommel-Reihen (13) ausgebildet sind, welche jeweils eine Reihe (13) von um ihre vertikalen Hochachsen drehbaren Rechentrommeln (14) umfassen, wobei die Rechentrommeln (14) in einer Draufsicht - in Bezug auf ihre stromaufseitigen Trommelflächen - in Richtung des die jeweilige Wasserreinigungseinheit (2, 6) mittelbar oder unmittelbar tragenden Ufers (5, 7) in zueinander entgegengesetzter Drehrichtung oder in gleicher Drehrichtung gleichsinnig rotativ antreibbar sind, wobei die Drehrichtungen der beiden Rechentrommel-Reihen (13) von zwei gegenüberliegenden Wasserreinigungseinheiten (2, 6) dann - in einer ersten Alternative - in Richtung derjenigen stromabseitigen Wasserreinigungseinheit (2 oder 6) ausgerichtet sind, welche mit einer Rechenreinigungsvorrichtung (25) zusammenwirkt oder wobei diese Drehrichtungen - in einer zweiten Alternative - entgegengesetzt zueinander und jeweils in Richtung der zwischen der jeweiligen Wasserreinigungseinheit (2, 6) und dem diese tragenden Ufer (5, 7) befindlichen Rechenreinigungsvorrichtungen (25) ausgerichtet sind.

2. Wasserreinigungsvorrichtung (1) für Fließgewässer (3) nach Anspruch 1, **dadurch gekennzeichnet, dass** der Überlappungsbereich (23) zwischen den freien Enden (10, 11) von zusammenwirkenden, in Fließrichtung (4) in einem Abstand (20) zueinander versetzten und von gegenüberliegenden Ufern (5, 7) ausgehenden, Wasserreinigungseinheiten (2, 6) eine Breite aufweist, welche in dem Bereich von 0,1 m bis 1000,0 m liegt.

3. Wasserreinigungsvorrichtung (1) für Fließgewässer (3) nach einem der vorhergehenden Ansprüche 1 oder 2, **dadurch gekennzeichnet, dass** die sich in Richtung der Breite (15) des Fließgewässers (3) ausdehnenden Breiten (19) der Wasserreinigungseinheiten (2, 6) gleich oder voneinander verschieden sind und die Breite (19) jeder Wasserreinigungseinheit (2, 6) - einschließlich eines gegebenenfalls vorhandenen Stabrechens (17) - in dem Bereich von 2,0 m bis 500,0 m liegt, wobei - in einer Draufsicht - der Versetzungs-Abstand (20) zwischen zwei von gegenüberliegenden Ufern (5, 7) mittelbar oder unmittelbar ausgehenden Wasserreinigungseinheiten (2, 6) in Fließrichtung (4) in dem Bereich von 1,0 m bis 500,0 m liegt.

4. Wasserreinigungsvorrichtung (1) für Fließgewässer (3) nach einem der vorhergehenden Ansprüche 1 bis 3, **dadurch gekennzeichnet, dass** in einer Draufsicht eine durch die jeweilige Wasserreinigungseinheit (2 und/oder 6) gedachte Längs-Achse (22) einerseits und die Fließrichtung (4) des Fließgewässers (3) andererseits einen Winkel α einschließen, der in dem Bereich von 20,0° bis 90,0° oder in dem Bereich von 170,0° bis 89,9° liegt, wobei die Winkel α von zwei einander gegenüberliegenden Wasserreinigungseinheiten (2, 6) gleich oder voneinander verschieden sind.

5. Wasserreinigungsvorrichtung (1) für Fließgewässer (3) nach einem der vorhergehenden Ansprüche 1 bis 4, **dadurch gekennzeichnet, dass** die Wasserreinigungseinheit (2, 6) jeweils in Form einer Rechentrommelreihe (13) aus mehreren um ihre Hochachsen drehbaren Rechentrommeln (14) ausgebildet ist, wobei zwischen den vertikal ausgerichteten Rechentrommeln (14) jeweils ein in Form eines vertikalen Streifens ausgebildeter Abstreifer (16) vorgesehen ist und zwischen den in Richtung des zugehörigen Ufers (5, 7) weisenden Enden (8, 9) der jeweiligen Wasserreinigungseinheit (2, 6) einerseits und dem die Wasserreinigungseinheit (2, 6) mittelbar oder unmittelbar tragenden Ufer (5, 7) jeweils ein Stabrechen (17) vorgesehen ist, mit vertikal oder horizontal ausgerichtetem Rechenstäben und zugehöriger, in Richtung des angrenzenden Ufers (5, 7) wirkender Rechenreinigungsvorrichtung (25), wobei die Breiten (24) des oder der Stabrechen (17) gleich oder voneinander verschieden sind und in dem Bereich von 0,4 m bis 50,0 m liegen.

6. Wasserreinigungsvorrichtung (1) für Fließgewässer (3) nach Anspruch 5, **dadurch gekennzeichnet, dass** die Rechentrommeln (14) jeder Rechentrommel-Reihe (13) mit der gleichen Rotationsgeschwindigkeit oder mit voneinander verschiedenen Rotationsgeschwindigkeiten in die gleiche oder voneinander verschiedene Drehrichtungen drehen, wobei jede Rechentrommel (14) in dem Bereich von 0,1 Umdrehung pro Minute (UpM) bis 20,0 UpM um ihre Hochachse rotativ antreibbar ist und wobei - in einer Draufsicht - die Durchmesser (21) der Rechentrommeln (14) gleich oder voneinander verschieden sind und in dem Bereich von 0,2 m bis 15,0 m liegen.

7. Wasserreinigungsvorrichtung (1) für Fließgewässer (3) nach einem der vorhergehenden Ansprüche 1 bis 6, **dadurch gekennzeichnet, dass** der Abstand zwischen einzelnen vertikalen oder horizontalen Rechenstäben oder zwischen den Rechenelementen einer Rechentrommel (14) in dem Bereich von 1,0 mm bis 300,0 mm liegt.

8. Wasserreinigungsvorrichtung (1) für Fließgewässer (3) nach einem der vorhergehenden Ansprüche 1 bis 7, **dadurch gekennzeichnet, dass** die Abstände (18) zwischen den freien Enden (10, 11) der Wasserreinigungseinheiten (2, 6) einerseits und dem jeweils gegenüberliegenden Ufer (5, 7) andererseits gleich oder voneinander verschieden sind und in dem Bereich von 1,0 m bis 200,0 m liegen.

9. Wasserreinigungsvorrichtung (1) für Fließgewässer (3) nach einem der vorhergehenden Ansprüche 1 bis 8, **dadurch gekennzeichnet, dass** die Fließgeschwindigkeit des zu reinigenden Fließgewässers (3) in dem Bereich von 0,05 m/sec bis 15,0 m/sec liegt und dass die Breite (15) des Fließgewässers (3) in dem Bereich von 1,0 m bis 1000,0 m liegt.

## Claims

1. A water cleaning device (1) for running waters (3), which comprises two, three, four, five, six or more water cleaning units (2, 6), which are arranged successively in the flow direction (4) and spaced apart from one another by a distance (20), wherein an end (8) of one water cleaning unit (2) is - in a top view - indirectly or directly connected to one bank (5) and an end (9) of the other, opposite water cleaning unit (6) is - in a top view - indirectly or directly connected to the other, opposite bank (7), wherein the free ends (10, 11) of the water cleaning units (2, 6), which protrude in the direction of the running water (3), overlap one another - in a top view - with respect to the flow direction (4) in an overlapping region (23), and wherein the water cleaning device (1) as a whole extends - in a top view - over the full width (15) of the running water (3), **characterized in that** the water cleaning units (2, 6) respectively have identical or different constructive designs and are respectively realized in the form of a bar screen (12) with vertical or horizontal screening bars - including associated screen cleaning systems (25) - or in the form of screening drum rows (13), which respectively comprise a row (13) of screening drums (14) that are rotatable about their vertical axes, wherein the screening drums (14) are in a top view rotatively driven in opposite rotating directions or in the same rotating direction - with respect to their upstream drum surfaces - namely in the direction of the bank (5, 7) that indirectly or directly supports the respective water cleaning unit (2, 6), and wherein the rotating directions of the two screening drum rows (13) of two opposite water cleaning units (2, 6) are - in a first alternative - oriented in the direction of the downstream water cleaning unit (2 or 6) that cooperates with a screen cleaning device (25) or wherein these rotation directions are - in a second alternative - oriented reverse to each other and respectively in the direction of the screen cleaning devices (25) which are located between the respective water cleaning unit (2, 6) and the bank (5, 7) bearing them.

2. The water cleaning device (1) for running waters (3) according to claim 1, **characterized in that** the overlapping region (23) between the free ends (10, 11) of cooperating water cleaning units (2, 6), which are offset relative to one another in the flow direction (4) by a distance (20) and originate from opposite banks (5, 7), has a width that lies in the range between 0.1 m and 1000.0 m,

3. The water cleaning device (1) for running waters (3) according to one of preceding claims 1 or 2, **characterized in that** the widths (19) of the water cleaning units (2, 6) measured in the direction of the width (15) of the running water (3) are identical or differ from one another and the width (19) of each water cleaning unit (2, 6) - including an optionally provided bar screen (17) - lies in the range between 2.0 m and 500.0 m, wherein - in a top view - the offset distance (20) between two water cleaning units (2, 6), which indirectly or directly originate from opposite banks (5, 7), in the flow direction (4) lies in the range between 1.0 m and 500.0 m.

4. The water cleaning device (1) for running waters (3) according to one of preceding claims 1 to 3, **characterized in that** an imaginary longitudinal axis (22) through the respective water cleaning unit (2 and/or 6) on the one hand and the flow direction (4) of the running water (3) on the other hand include in a top view an angle α that lies in the range between 20° and 90.0° or in the range between 170.0° and 89.9°, wherein the angles α of two opposite water cleaning units (2, 6) are identical or differ from one another.

5. The water cleaning device (1) for running waters (3) according to one of preceding claims 1 to 4, **characterized in that** the water cleaning unit (2, 6) is respectively realized in the form of a screening drum row (13), which is composed of multiple screening drums (14) that are rotatable about their vertical axes, wherein a wiper (16) in the form of a vertical strip is respectively provided between the vertically oriented screening drums (14), wherein a bar screen (17) with vertically or horizontally oriented screening bars and with an associated screen cleaning device (25) that acts in the direction of the adjacent bank (5, 7) is respectively provided between the ends (8, 9) of the respective water cleaning unit (2, 6), which point in the direction of the associated bank (5, 7), and the bank (5, 7) that indirectly or directly supports the water cleaning unit (2, 6), and wherein the widths (24) of the bar screens (17) are identical or differ from one another and lie in the range between 0.4 m and 50.0 m.

6. The water cleaning device (1) for running waters (3) according to claim 5, **characterized in that** the screening drums (14) of each screening drum row (13) rotate in the same rotating direction or in different rotating directions with the same rotational speed or with different rotational speeds, wherein each screening drum (14) can be rotatively driven about its vertical axis with a speed in the range between 0.1 revolutions per minute (rpm) and 20.0 rpm, and wherein - in a top view - the diameters (21) of the screening drums (14) are identical or differ from one another and lie in the range between 0.2 m and 15.0 m.

7. The water cleaning device (1) for running waters (3) according to one of preceding claims 1 to 6, **characterized in that** the distance between individual vertical or horizontal screening bars or between the screen elements of a screening drum (14) lies in the range between 1.0 mm and 300.0 mm.

8. The water cleaning device (1) for running waters (3) according to one of preceding claims 1 to 7, **characterized in that** the distances (18) between the free ends (10, 11) of the water cleaning units (2, 6) on the one hand and the respective opposite bank (5, 7) on the other hand are identical or differ from one another and lie in the range between 1.0 m and 200.0 m.

9. The water cleaning device (1) for running waters (3) according to one of preceding claims 1 to 8, **characterized in that** the flow velocity of the running water (3) to be cleaned lies in the range between 0.05 m/sec and 15.0 m/sec, and **in that** the width (15) of the running water (3) lies in the range between 1.0 m and 1000.0 m.

## Revendications

1. Dispositif d'épuration des eaux (1) pour des eaux d'écoulement (3), lequel comprend deux, trois, quatre, cinq, six ou plusieurs unités d'épuration des eaux (2, 6), lesquelles sont disposées dans la direction d'écoulement (4) l'une derrière l'autre et éloignées l'une de l'autre à une distance (20), sachant qu'une extrémité (8) d'une unité d'épuration des eaux (2), en vue de dessus, est directement ou indirectement en liaison avec un bord (5) et sachant qu'une extrémité (9) de l'autre unité d'épuration des eaux (6), en vue de dessus, est directement ou indirectement en liaison avec l'autre bord opposé (7) et sachant que les extrémités libres (10, 11) des unités d'épuration des eaux (2, 6) dépassant en direction des eaux d'écoulement (3) se chevauchent mutuellement, en vue de dessus, par rapport à la direction d'écoulement (4) venant en prise par l'arrière dans une zone de chevauchement (23), sachant que le dispositif d'épuration des eaux (1), en vue de dessus, englobe dans sa totalité la largeur complète (15) des eaux d'écoulement (3), **caractérisé en ce que** les unités d'épuration des eaux (2, 6) comportent respectivement des types de construction identiques ou différents les uns des autres et sont respectivement constitués sous la forme d'un dégrilleur (12) avec des barres de grille verticales ou horizontales, y compris des systèmes de dégrillage correspondants (25), ou sous la forme de rangées de tambours à grille (13), lesquelles comprennent respectivement une rangée (13) de tambours à grille (14) pouvant tourner autour de leurs axes verticaux, sachant que les tambours à grille (14), dans une vue de dessus, par rapport à leurs surfaces de tambour du côté amont, peuvent être entraînés en rotation dans un sens de rotation opposé l'un à l'autre ou identiquement dans le même sens de rotation en direction du bord (5, 7) portant directement ou indirectement l'unité d'épuration des eaux respective (2, 6), sachant que les sens de rotation des deux rangées de tambours à grille (13) de deux unités d'épuration des eaux (2, 6) opposées sont ensuite orientés, dans une première solution possible, dans la direction de l'unité d'épuration des eaux (2 ou 6) côté aval, laquelle coopère avec un dispositif de dégrillage (25) ou sachant que ces sens de rotation, dans une deuxième solution possible, sont orientés opposés l'un à l'autre et respectivement en direction des dispositifs de dégrillage (25) se trouvant entre l'unité d'épuration des eaux respective (2, 6) et le bord (5, 7) portant celle-ci.

2. Dispositif d'épuration des eaux (1) pour des eaux d'écoulement (3) selon la revendication 1, **caractérisé en ce que** la zone de chevauchement (23) entre les extrémités libres (10, 11) des unités d'épuration des eaux (2, 6) coopérant, décalées l'une par rapport à l'autre dans la direction d'écoulement (4) à une distance (20) et partant des bords opposés (5, 7), comporte une largeur, laquelle se situe dans la gamme de .0,1 m à 1000,0 m.

3. Dispositif d'épuration des eaux (1) pour des eaux d'écoulement (3) selon l'une quelconque des revendications 1 ou 2, **caractérisé en ce que** les largeurs (19)des unités d'épuration des eaux (2, 6) s'étendant en direction de la largeur (15) des eaux d'écoulement (3) sont identiques ou différentes les unes des autres et la largeur (19) de chaque unité d'épuration des eaux (2, 6), y compris d'un dégrilleur (17) existant le cas échéant, se situe dans la gamme de 2,0 m à 500,0 m, sachant que, dans une vue de dessus, la distance de décalage (20) entre deux unités d'épuration des eaux (2, 6) dans la direction d'écoulement (4) partant directement ou indirectement de bords opposés (5, 7) se situe dans la gamme de 1,0 m à 500,0 m.

4. Dispositif d'épuration des eaux (1) pour des eaux d'écoulement (3) selon l'une quelconque des revendications 1 à 3, **caractérisé en ce que** dans une vue de dessus, un axe longitudinal (22) conçu à travers l'unité d'épuration des eaux respective (2 et/ou 6) d'une part et la direction d'écoulement (4) des eaux d'écoulement (3) d'autre part, forment un angle α, qui se situe dans la gamme de 20,0° à 90,0° ou dans la gamme de 170,0° à 89,9°, sachant que les angles α de deux unités d'épuration des eaux (2, 6) opposées l'une à l'autre sont identiques ou différents les uns des autres.

5. Dispositif d'épuration des eaux (1) pour des eaux d'écoulement (3) selon l'une quelconque des revendications précédentes 1 à 4, **caractérisé en ce que** l'unité d'épuration des eaux (2, 6) est respectivement constituée sous la forme d'une rangée de tambours à grille (13) composée de plusieurs tambours à grille (14) pouvant tourner autour de leurs axes verticaux, sachant qu'entre les tambours à grille (14) orientés verticalement est respectivement prévu un racloir (16) constitué sous la forme d'une bande verticale et entre les extrémités (8, 9) de l'unité d'épuration des eaux respective (2, 6) tournées en direction du bord correspondant (5, 7) d'une part et le bord (5, 7) portant directement ou indirectement l'unité d'épuration des eaux (2, 6) d'autre part est respectivement prévue une grille à barreaux (17) avec des barreaux de grille orientés verticalement ou horizontalement, et un dispositif de dégrillage (25) correspondant agissant en direction du bord limitrophe (5, 7), sachant que les largeurs (24) du ou des grille(s) à barreaux (17) sont identiques ou différentes les unes des autres et se situent dans la gamme de 0,4 m à 50,0 m.

6. Dispositif d'épuration des eaux (1) pour des eaux d'écoulement (3) selon la revendication 5, **caractérisé en ce que** les tambours de grille(14) de chaque rangée de tambours de grille (13) tournent à la même vitesse de rotation ou à des vitesses de rotation différentes les unes des autres dans les mêmes sens de rotation ou dans des sens de rotation différents les uns des autres, sachant que chaque tambour de grille (14) peut être entraîné en rotation dans la gamme de 0,1 tour par minute (tr/min) à 20,0 tr/min autour de son axe vertical et sachant qu'en vue de dessus, les diamètres (21) des tambours de grille (14) sont identiques ou différents les uns des autres et se situent dans la gamme de 0,2 m à 15,0 m.

7. Dispositif d'épuration des eaux (1) pour des eaux d'écoulement (3) selon l'une quelconque des revendications précédentes 1 à 6, **caractérisé en ce que** la distance entre les barreaux de grille verticaux ou horizontaux individuels ou entre les éléments de grille d'un tambour de grille (14) se situe dans la gamme de 1,0 mm à 300,0 mm.

8. Dispositif d'épuration des eaux (1) pour des eaux d'écoulement (3) selon l'une quelconque des revendications précédentes 1 à 7, **caractérisé en ce que** les distances (18) entre les extrémités libres (10, 11) des unités d'épuration des eaux (2, 6) d'une part et le bord (5, 7) respectivement opposé d'autre part sont identiques ou différentes les unes des autres et se situent dans la gamme de 1,0 m à 200,0 m.

9. Dispositif d'épuration des eaux (1) pour des eaux d'écoulement (3) selon l'une quelconque des revendications précédentes 1 à 8, **caractérisé en ce que** la vitesse d'écoulement des eaux d'écoulement (3) à épurer se situe dans une gamme de 0,05 m/s à 15,0 m/s et **en ce que** la largeur (15) des eaux d'écoulement (3) se situe dans la gamme de 1,0 m à 1000,0 m.
